# FASCICULE DE BREVET EUROPEEN

(11) **EP 2 647 112 B1**
(45) Date de publication et mention de la délivrance du brevet: **27.08.2014**
(21) Numéro de dépôt: 11778622.8
(22) Date de dépôt: 04.11.2011
(51) Int. Cl.: H02P 27/08, H02P 29/00, H02M 1/12

(54) **VARIATEUR DE VITESSE EQUIPE D'UN DISPOSITIF DE FILTRAGE DE MODE COMMUN**
VERSTELLANTRIEB MIT EINER GLEICHTAKTFILTRIERVORRICHTUNG
VARIABLE SPEED DRIVE PROVIDED WITH A COMMON-MODE FILTERING DEVICE

(30) Priorité: 01.12.2010 FR 1059951
(43) Date de publication de la demande: 09.10.2013
(73) Titulaire: Schneider Toshiba Inverter Europe SAS, 27120 Pacy sur Eure (FR)
(72) Inventeur: PLANQUE, Cyrille, F-27120 Pacy sur Eure (FR); LOIZELET, Philippe, F-27120 Le Plessis Hebert (FR); BARAUNA, Allan Pierre, F-27200 Vernon (FR)
(74) Mandataire: Bié, Nicolas
(86) Numéro de dépôt international: PCT/EP2011/069387
(87) Numéro de publication internationale: WO 2012/072367

(56) Documents cités:
- JP-A- 2004 260 963
- US-A1- 2008 037 298
- US-A1- 2008 284 367

## Description

La présente invention se rapporte à un variateur de vitesse équipé d'un dispositif de filtrage de mode commun comportant un filtre CEM (Compatibilité Electro-Magnétique) utilisé en entrée du variateur de vitesse.

De façon connue, un variateur de vitesse du type convertisseur de fréquence comporte un module redresseur qui fournit une tension continue à partir d'un réseau d'alimentation alternatif extérieur. Le variateur de vitesse comporte ensuite un module onduleur (ou hacheur) doté de composants électroniques semi-conducteurs de puissance pour hacher la tension continue par Modulation de Largeur d'Impulsion (MLI ou Pulse Width Modulation - PWM), de façon à fournir en sortie via un câble de puissance une tension électrique variable pulsée et une vitesse de rotation variable au moteur. Pour commander le moteur en MLI avec une tension variable appropriée, une unité de commande du variateur contrôle la conduction et le blocage des composants électroniques semi-conducteurs à la fréquence de découpage.

La fréquence de commutation pour la commande MLI des semi-conducteurs de puissance correspond à la fréquence de découpage du variateur. En fonction du type et du calibre du variateur, cette fréquence de commutation varie généralement entre approximativement 2 et 16 kHz.

La commutation des composants électroniques semi-conducteurs génère en sortie du variateur de vitesse une variation de la tension de mode commun entraînant en amont et en aval du système de conversion des perturbations électromagnétiques de même mode, au travers d'un bouclage par la terre des courants de fuite dus notamment aux capacités parasites du moteur et du câble moteur. Un dispositif de filtrage est donc souvent utilisé pour atténuer les courants de mode commun et éviter leur propagation vers le réseau d'alimentation.

Un filtre CEM est connecté entre le réseau d'alimentation alternatif et le module redresseur du variateur. Suivant l'encombrement du filtre et suivant la taille et le type du variateur, le filtre peut être soit intégré dans le boîtier du variateur, soit externe au variateur. Pour répondre notamment aux normes européennes actuelles en matière de compatibilité électromagnétique, le filtre CEM doit être efficace dans une zone de fréquence située entre 150 kHz et 30 MHz.

Le filtre CEM comporte habituellement une inductance de mode commun comprenant un enroulement sur chaque ligne conductrice du réseau d'alimentation, et des condensateurs de mode commun reliés entre chaque ligne et la terre, en aval de l'inductance de mode commun. Le filtre forme ainsi un circuit passif de type passe-bas avec une fréquence de coupure permettant d'obtenir l'atténuation désirée des courants de mode commun dans la zone de fréquence fixée par les normes.

La zone de fréquence de coupure souhaitée du filtre CEM fixe les valeurs des condensateurs et de l'inductance de mode commun. La valeur des condensateurs de mode commun est en règle générale constante. En revanche, les caractéristiques de l'inductance de mode commun sont choisies selon l'intensité du courant de mode commun qui la traverse. Ce courant est fonction de la tension de mode commun générée par la commutation des interrupteurs du variateur de vitesse et des capacités parasites des principaux éléments que sont le moteur et le câble moteur. En fonction du niveau accepté du courant de mode commun, l'inductance de mode commun doit donc être largement dimensionnée afin de ne pas saturer.

Le filtre CEM étant un circuit passif du deuxième ordre, il comporte une fréquence de résonance proche de sa fréquence de coupure. Ainsi, il se peut que, dans une certaine bande de fréquence autour de la fréquence de résonance, le filtre CEM amplifie les courants de mode commun au lieu de les atténuer, favorisant ainsi la saturation de l'inductance.

La valeur de cette fréquence de résonance dépend évidemment de la valeur de l'inductance de mode commun, laquelle dépend de la valeur du courant de mode commun.

Il est connu du document JP2004 260963 une solution permettant d'agir sur la commande du module onduleur d'un variateur de vitesse lors de la détection d'un état de saturation du filtre CEM situé en entrée.

Le but de l'invention est de proposer une solution pour désaturer le filtre CEM lorsque celui-ci est déjà saturé, cette solution étant simple, fiable et économique.

Ce but est atteint par un variateur de vitesse comportant :
- un module redresseur connecté à un réseau d'alimentation alternatif qui comporte plusieurs lignes d'alimentation,
- un module onduleur destiné à être connecté à une charge électrique et comportant des composants électroniques semi-conducteurs,
- une unité de commande appliquant une commande par MLI pour commander le module onduleur en vue d'appliquer une tension variable à la charge électrique,
- un dispositif de filtrage connecté entre le module redresseur et le réseau d'alimentation alternatif et comportant un filtre CEM comprenant une inductance de mode commun possédant un enroulement sur chaque ligne d'alimentation, lesdits enroulements étant couplés magnétiquement entre eux, et des condensateurs de mode commun connectés sur chaque ligne d'alimentation, en aval de l'inductance de mode commun,
- des moyens de détection d'un état de saturation du filtre CEM, lesdits moyens de détection coopérant avec l'unité de commande du module onduleur,
- l'unité de commande comportant des moyens de traitement agencés pour agir sur la commande par MLI du module onduleur lorsqu'un état de saturation du filtre CEM est détecté,
- les moyens de détection étant connectés en série avec les condensateurs de mode commun.

Les moyens de détection comportent par exemple une résistance connectée en série avec les condensateurs de mode commun et un optocoupleur connecté en parallèle de ladite résistance.

Selon une particularité, les moyens de traitement sont agencés pour agir sur la fréquence de commutation des composants électroniques semi-conducteurs du module onduleur.

Selon une autre particularité, les moyens de traitement sont agencés pour agir sur la stratégie de commande par MLI appliquée au module onduleur.

Selon une autre particularité, les moyens de détection comportent un enroulement supplémentaire couplé magnétiquement aux enroulements de l'inductance de mode commun et une résistance connectée en parallèle dudit enroulement supplémentaire.

D'autres caractéristiques et avantages vont apparaître dans la description détaillée qui suit en se référant à un mode de réalisation donné à titre d'exemple et représenté par les dessins annexés sur lesquels :
- la figure 1 représente un schéma d'un variateur de vitesse existant,
- la figure 2 représente un variateur de vitesse selon un premier mode de réalisation de l'invention,
- la figure 3 représente un variateur de vitesse selon un deuxième mode de réalisation de l'invention.

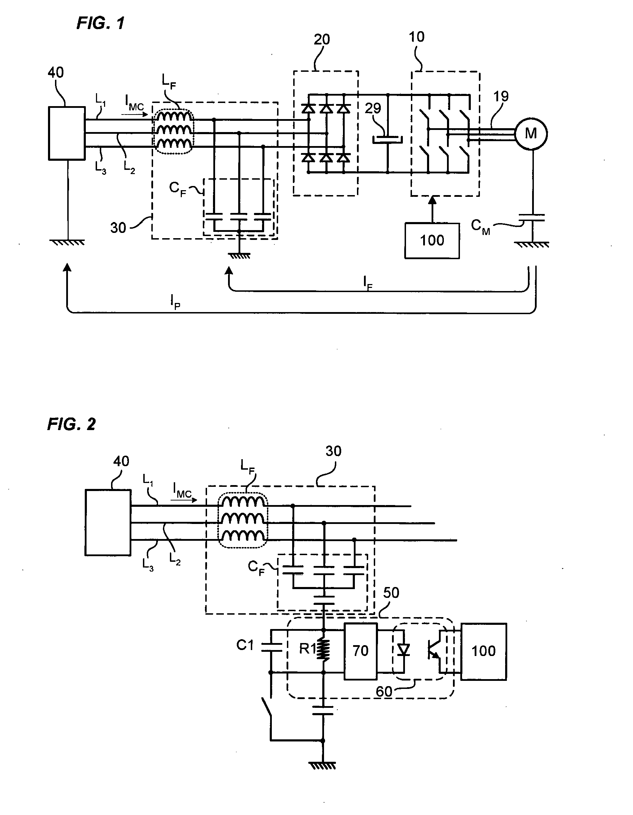

En référence au schéma de principe simplifié de la figure 1, un variateur de vitesse est destiné à la commande d'une charge électrique telle que par exemple un moteur électrique M de type synchrone ou asynchrone. Le variateur comprend un module onduleur 10 relié au moteur M par un câble de puissance 19. Pour chaque phase du moteur, le module onduleur 10 comprend deux composants électroniques semi-conducteurs de puissance de type IGBT ou autres (représentés sur la figure 1 comme de simples interrupteurs pour simplifier le dessin), et une unité de commande 100 comportant un microcontrôleur permettant de commander par MLI ces composants électroniques semi-conducteurs du module onduleur 10 en vue de fournir une tension variable au moteur M.

En amont du module onduleur 10, le variateur comporte également un module redresseur 20 et un bus continu d'alimentation. En référence à la figure 1, le module redresseur 20 est connecté au réseau d'alimentation 40. Le module redresseur 20 est par exemple composé d'un pont de diodes qui permet de redresser une tension alternative fournie par le réseau et d'appliquer une tension redressée sur le bus continu d'alimentation. Plus précisément, le module redresseur 20 comporte plusieurs bras composés chacun de deux diodes en série, chaque bras étant connecté à une phase d'entrée par le point milieu situé entre les deux diodes.

Le bus continu d'alimentation de puissance relie le module redresseur 20 au module onduleur 10. Il comporte une ligne d'alimentation à potentiel positif V+ et une ligne d'alimentation à potentiel négatif V-. Au moins un condensateur de bus 29 est connecté à chacune des deux lignes d'alimentation du bus et permet de maintenir la tension du bus à une valeur constante.

La figure 1 montre un réseau d'alimentation extérieur triphasé comportant trois lignes d'alimentation L1, L2, L3, mais l'invention s'applique de façon équivalente à un réseau d'alimentation monophasé. De même, le moteur M décrit dans la figure 1 est alimenté en triphasé mais l'invention s'applique évidemment aussi à un moteur électrique alimenté en monophasé.

Un dispositif de filtrage 30, composé d'un filtre CEM, est positionné entre le réseau d'alimentation 40 et le module redresseur 20. Les caractéristiques de ce filtre CEM sont calculées pour permettre au variateur de vitesse de répondre aux normes CEM dans une zone de fréquence allant au-delà de 150 kHz. Le filtre CEM 30 comporte une inductance de mode commun L_{F} connectée en série entre le réseau 40 et le module redresseur 20. Elle est composée d'un enroulement sur chaque ligne L1, L2, L3 du réseau d'alimentation, les enroulements étant magnétiquement couplés entre eux. Le filtre CEM 30 comporte également des condensateurs de mode commun C_{F} connectés entre chaque ligne L1, L2, L3 et la terre, en aval de l'inductance de mode commun L_{F}. Le filtre CEM 30 peut en plus comporter des capacités différentielles entre phases (filtrage différentiel) non représentées sur la figure 1. Suivant l'encombrement du filtre et suivant le calibre et le type du variateur, le filtre CEM 30 peut être soit intégré dans le boîtier du variateur, soit externe au variateur.

On sait que le moteur M et le câble 19 ont des capacités parasites réparties à la terre, que l'on peut modéliser par une capacité commune C_{M}. La commutation des semi-conducteurs du module onduleur 10 entraîne des variations de tension très importantes qui provoquent la création d'un courant de mode commun I_{MC} égal à I_{MC} = C_{M} * dV/dt.

Ce courant de mode commun I_{MC} se reboucle par la terre via la capacité moteur+câble C_{M} en empruntant soit un chemin noté I_{F} dans la figure 1, via le module redresseur 20, le module onduleur 10, C_{M}, C_{F}, soit un chemin noté I_{P} via le module redresseur 20, le module onduleur 10, C_{M}, 40, L_{F}. Pour minimiser la propagation des perturbations sur le réseau extérieur, on souhaite évidemment privilégier le chemin I_{F} plutôt que le chemin I_{P} pour éviter de propager les perturbations sur le réseau électrique extérieur. Dans ce but, on utilise donc des valeurs d'impédances faibles pour les condensateurs de mode commun C_{F} et des valeurs d'impédances fortes pour l'inductance de mode commun L_{F}.

Néanmoins, plus le câble 19 est long, plus la capacité C_{M} augmente et plus le courant de mode commun I_{MC} augmente. Si des perturbations ponctuelles côté moteur et/ou côté réseau apparaissent, il y a alors risque de saturation de l'inductance de mode commun L_{F} qui ne va plus filtrer le courant I_{MC}. Dans ce cas, le chemin I_{F} risque de ne plus être privilégié, ce qui va nuire aux performances du filtre CEM.

Ainsi, à la fréquence de découpage, on risque de voir apparaître côté réseau d'alimentation des pics de courant dus à la saturation de l'inductance de mode commun L_{F} lorsque le courant de mode commun I_{MC}, généré par les commutations des composants électroniques semi-conducteurs du module onduleur 10, est important et amplifié par la résonance du filtre CEM d'entrée.

Un des buts de l'invention est donc de proposer un système permettant de désaturer le filtre CEM lorsque celui-ci a atteint un état de saturation. Bien entendu, la désaturation du filtre ne pourra se produire qu'une fois que le signal perturbateur excitant la résonance du filtre CEM a disparu.

Pour cela l'invention comporte des moyens de détection 50, 51 d'un état de saturation du filtre CEM, ces moyens de détection 50, 51 coopérant avec l'unité de commande 100 du module onduleur pour agir sur la commande du module onduleur 10 lorsqu'un état de saturation du filtre CEM est détecté.

Deux modes de réalisation peuvent par exemple être envisagés. Bien entendu, la présente demande ne se limite pas à ces deux modes de réalisation particuliers.

En référence à la figure 2, les moyens de détection 50 comportent par exemple une résistance R1 connectée en série avec les condensateurs de mode commun C_{F} et un optocoupleur 60 dont l'émetteur est connecté en parallèle de la résistance R1 et le récepteur connecté au microcontrôleur de l'unité de commande 100. Lorsque le courant de mode commun I_{MC} augmente, la chute de tension aux bornes de la résistance R1 augmente également. Lorsque la tension aux bornes de la résistance R1 atteint un certain seuil, celle-ci polarise la diode émettrice de l'optocoupleur 60 qui envoie un signal au récepteur de l'optocoupleur. Le signal reçu par le microcontrôleur de l'unité de commande 100 est traité de manière à réaliser une action sur la commande par MLI du module onduleur. Les différentes actions réalisables sur le module onduleur sont précisées plus loin.

Sur cette figure 2, un filtre passe-bas 70 est connecté en parallèle de la résistance R1. Un condensateur C1 connecté en parallèle de la résistance R1 permet d'éviter de dégrader les performances du filtre CEM 30 dans la bande de fréquence 150KHz-30MHz.

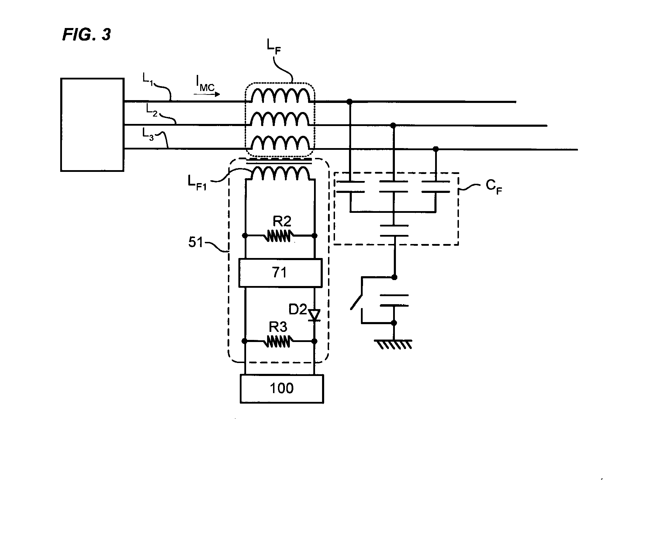

En référence à la figure 3, les moyens de détection 51 comportent un enroulement supplémentaire couplé magnétiquement aux enroulements de l'inductance de mode commun L_{F} et une résistance R2 connectée en parallèle de cet enroulement supplémentaire. Cet ensemble est connecté en parallèle du microcontrôleur de l'unité de commande 100. Lorsque le courant de mode commun I_{MC} augmente à travers l'inductance de mode commun L_{F}, une tension apparaît aux bornes de la résistance R2. Cette tension est envoyée au microcontrôleur de l'unité de commande 100. Sur cette figure 3, un filtre passe-bas 71 est également connecté en parallèle de la résistance R2, une diode D2 est destinée à bloquer l'alternance négative du courant capté et la résistance R3 connectée en parallèle de la résistance R2 et du filtre passe-bas 71 permet d'adapter l'impédance de sortie du circuit pour lire la tension sur le microcontrôleur.

Lorsqu'un état de saturation du filtre est détecté, différentes actions permettant de désaturer le filtre peuvent être réalisées. Ces actions sont mises en oeuvre par le microcontrôleur de l'unité de commande 100 et permettent d'agir sur la commande du module onduleur 10. Si nécessaire, plusieurs actions décrites ci-dessous peuvent être conjuguées pour accélérer la désaturation du filtre.

L'action la plus efficace est d'agir sur la fréquence de commutation des composants électroniques semi-conducteurs du module onduleur 10. Pour contribuer à la désaturation du filtre, la fréquence de commutation est ainsi modifiée de manière à s'écarter de la fréquence de résonance du filtre CEM. Une autre action possible est de changer la stratégie de commande par MLI appliquée au module onduleur 10, un changement de stratégie permettant de modifier les instants de commutation et le nombre de composants commutés. Il existe en effet différentes stratégies possibles de commande par MLI, définies par exemple sous les acronymes SPWM ("Sinusoidal Pulse Width Modulation"), DPWM ("Digital Pulse Width Modulation"), THIPWM ("Third Harmonic Interject Pulse Width Modulation")... Certaines stratégies de commande par MLI contribuent davantage que d'autres à la désaturation du filtre CEM.

Selon l'invention, les circuits présentés en figures 2 et 3 pour désaturer le filtre CEM permettent aussi de protéger le filtre d'un échauffement excessif, notamment lorsque le câble de puissance 19 est très long. En effet, en réduisant la fréquence de commutation, on réduit également les pertes fer.

Il est bien entendu que l'on peut, sans sortir du cadre de l'invention, imaginer d'autres variantes et perfectionnements de détail et de même envisager l'emploi de moyens équivalents.

## Revendications

1. Variateur de vitesse comportant :
- un module redresseur (20) connecté à un réseau d'alimentation (40) alternatif qui comporte plusieurs lignes d'alimentation (L1, L2, L3),
- un module onduleur (10) destiné à être connecté à une charge électrique (M) et comportant des composants électroniques semi-conducteurs,
- une unité de commande (100) appliquant une commande par MLI pour commander le module onduleur (10) en vue d'appliquer une tension variable à la charge électrique,
- un dispositif de filtrage connecté entre le module redresseur (20) et le réseau d'alimentation alternatif (40) et comportant un filtre CEM comprenant une inductance de mode commun (L_{F}) possédant un enroulement sur chaque ligne d'alimentation, lesdits enroulements étant couplés magnétiquement entre eux, et des condensateurs de mode commun (C_{F}) connectés sur chaque ligne d'alimentation, en aval de l'inductance de mode commun,
- des moyens de détection (50, 51) d'un état de saturation du filtre CEM, lesdits moyens de détection coopérant avec l'unité de commande (100) du module onduleur (10),
- l'unité de commande (100) comportant des moyens de traitement agencés pour agir sur la commande par MLI du module onduleur (10) lorsqu'un état de saturation du filtre CEM est détecté,
- **caractérisé en ce que** les moyens de détection (50) sont connectés en série avec les condensateurs de mode commun (C_{F}).

2. Variateur de vitesse selon la revendication 1, **caractérisé en ce que** les moyens de traitement sont agencés pour agir sur la fréquence de commutation des composants électroniques semi-conducteurs du module onduleur (10).

3. Variateur de vitesse selon la revendication 1 ou 2, **caractérisé en ce que** les moyens de traitement sont agencés pour agir sur la stratégie de commande par MLI appliquée au module onduleur (10).

4. Variateur de vitesse selon l'une des revendications 1 à 3, **caractérisé en ce que** les moyens de détection (50) comportent une résistance (R1) connectée en série avec les condensateurs de mode commun (C_{F}) et un optocoupleur (60) connecté en parallèle de ladite résistance (R1).

## Patentansprüche

1. Umrichter, der aufweist:
- ein Gleichrichtermodul (20), das mit einem Wechselstrom-Versorgungsnetz (40) verbunden ist, welches mehrere Versorgungsleitungen (L1, L2, L3) aufweist,
- ein Wechselrichtermodul (10), das dazu bestimmt ist, mit einer elektrischen Last (M) verbunden zu werden, und elektronische Halbleiter-Bauelemente aufweist,
- eine Steuereinheit (100), die eine Steuerung durch PWM zur Steuerung des Wechselrichtermoduls (10) anwendet, um eine variable Spannung an die elektrische Last anzulegen,
- eine Filtervorrichtung, die zwischen dem Gleichrichtermodul (20) und dem Wechselstrom-Versorgungsnetz (40) verbunden ist und ein EMV-Filter aufweist, das eine Gleichtakt-Drosselspule (L_{F}), die eine Wicklung auf jeder Versorgungsleitung besitzt, wobei die Wicklungen magnetisch miteinander gekoppelt sind, und Gleichtakt-Kondensatoren (C_{F}) enthält, die mit jeder Versorgungsleitung hinter der Gleichtakt-Drosselspule verbunden sind,
- Erfassungseinrichtungen (50, 51) eines Sättigungszustands des EMV-Filters, wobei die Erfassungseinrichtungen mit der Steuereinheit (100) des Wechselrichtermoduls (10) zusammenwirken,
- wobei die Steuereinheit (100) Verarbeitungseinrichtungen aufweist, die eingerichtet sind, um auf die Steuerung durch PMW des Wechselrichtermoduls (10) einzuwirken, wenn ein Sättigungszustand des EMV-Filters erfasst wird,
**dadurch gekennzeichnet, dass** die Erfassungseinrichtungen (50) mit den Gleichtakt-Kondensatoren (C_{F}) in Reihe geschaltet sind.

2. Umrichter nach Anspruch 1, **dadurch gekennzeichnet, dass** die Verarbeitungseinrichtungen eingerichtet sind, um auf die Schaltfrequenz der elektronischen Halbleiter-Bauelemente des Wechselrichtermoduls (10) einzuwirken.

3. Umrichter nach Anspruch 1 oder 2, **dadurch gekennzeichnet, dass** die Verarbeitungseinrichtungen eingerichtet sind, um auf die Steuerstrategie durch PWM einzuwirken, die an das Wechselrichtermodul (10) angewendet wird.

4. Umrichter nach einem der Ansprüche 1 bis 3, **dadurch gekennzeichnet, dass** die Erfassungseinrichtungen (50) einen Widerstand (R1), der mit den Gleichtakt-Kondensatoren (C_{F}) in Reihe geschaltet ist, und einen Optokoppler (60) aufweisen, der mit dem Widerstand (R1) parallelgeschaltet ist.

## Claims

1. Variable speed drive comprising:
- a rectifier module (20) connected to an AC power supply network (40) which comprises a number of power supply lines (L1, L2, L3),
- an inverter module (10) intended to be connected to an electrical load (M) and comprising semiconductor electronic components,
- a control unit (100) applying control by PWM to control the inverter module (10) in order to apply a variable voltage to the electrical load,
- a filtering device connected between the rectifier module (20) and the AC power supply network (40) and comprising an EMC filter comprising a common-mode inductor (L_{F}) having a winding on each power supply line, said windings being magnetically coupled together, and common-mode capacitors (C_{F}) connected to each power supply line, downstream of the common-mode inductor,
- means (50, 51) for detecting an EMC filter saturation state, said detection means cooperating with the control unit (100) of the inverter module (10),
- the control unit (100) comprising processing means arranged to act on the control by PWM of the inverter module (10) when an EMC filter saturation state is detected,
- **characterized in that** the detection means (50) are connected in series with the common-mode capacitors (C_{F}).

2. Variable speed drive according to Claim 1, **characterized in that** the processing means are arranged to act on the switching frequency of the semiconductor electronic components of the inverter module (10).

3. Variable speed drive according to Claim 1 or 2, **characterized in that** the processing means are arranged to act on the control strategy by PWM applied to the inverter module (10).

4. Variable speed drive according to one of Claims 1 to 3, **characterized in that** the detection means (50) comprise a resistor (Rl) connected in series with the common-mode capacitors (C_{F}) and an optocoupler (60) connected in parallel with said resistor (Rl).
